# EUROPEAN PATENT APPLICATION

(11) **EP 2 511 814 A1**
(43) Date of publication of application: **17.10.2012**
(21) Application number: 10840575.4
(22) Date of filing: 29.12.2010
(51) Int. Cl.: G06F 3/06

(54) **METHOD OF IMPLEMENTING ARRAY OF DISK AND METHOD AND DEVICE OF READING/WRITING DATA**

(30) Priority: 29.12.2009 CN 200910243998
(71) Applicant: Chengdu Huawei Symantec Technologies Co., Ltd, Chengdu, Sichuan 611731 (CN)
(72) Inventor: LUO, Jiaolin, Guangdong 518129 (CN)
(74) Representative: Pfenning, Meinig & Partner GbR
(86) International application number: PCT/CN2010/080419
(87) International publication number: WO 2011/079787

(57) **Abstract**

A method for implementing a disk array, and a method and apparatus for reading or writing data are provided in embodiments of the present invention. The method includes: creating logical partition regions according to the number of controllers in a controller group, where each logical partition region corresponds to one controller in one controller group; recording a mapping relationship between the logical partition regions and the controllers in a controller mapping table; and allocating, according to a set disk selection policy, chunklets for the logical partition regions from a physical disk that is managed by a controller in a controller group that is corresponding to each logical partition region, and recording a mapping relationship between the logical partition regions and the chunklets in a chunklet mapping table. In the embodiments of the present invention, a chunklet in a physical disk that is managed by a controller in the same controller group is set to corresponding to each logical partition region, so that logical partition regions of each controller may be operated in parallel, variable quantity of mapping relationships is little, and therefore, an expansion operation is completed easily.

## Description

This application claims priority to Chinese Patent Application No. 200910243998.7, filed with the Chinese Patent Office on December 29, 2009, and entitled "METHOD FOR IMPLEMENTING DISK ARRAY, AND METHOD AND APPARATUS FOR READING OR WRITING DATA", which is hereby incorporated by reference in its entirety.

### FIELD OF THE INVENTION

The present invention relates to a disk array control technology, and in particular, to a method for implementing a disk array, and a method and apparatus for reading or writing data.

### BACKGROUND OF THE INVENTION

A disk array is a disk group formed by a plurality of physical disks. At present, medium-end and low-end disk arrays can support only a working mode of two controllers. An existing disk array is divided into three layers, that is, a virtual volume (Virtual Volume, referred to as VV), a logic disk (Logic Disk, referred to as LD), and a chunklet (Chunklet). A virtual volume is a disk space that is visible to a user, for example, a common "disk D" and "disk E", and so on. Each virtual volume corresponds to multiple LDs. Each LD corresponds to multiple chunklets. A chunklet is a basic unit for managing a physical disk and is granularity for managing a disk array. Each physical disk may be divided into multiple chunklets. To achieve a purpose that data is evenly distributed, generally, chunklets corresponding to each LD are evenly distributed on each physical disk. A controller performs a control and access operation on a physical disk. Each controller usually corresponds to a certain number of physical disks. During research on the present invention, the inventor finds that: Due to a limitation on an organizational architecture of a disk array, a controller of an existing disk array is hard to be expanded.

### SUMMARY OF THE INVENTION

A method for implementing a disk array and a method and apparatus for reading or writing data are provided in embodiments of the present invention to improve expansibility of a disk array.

A method for implementing a disk array is provided in an embodiment of the present invention, which includes:
creating logical partition regions according to the number of controllers in a controller group, where each logical partition region corresponds to one controller in one controller group;
recording a mapping relationship between the logical partition regions and the controllers in a controller mapping table; and
allocating, according to a set disk selection policy, chunklets for the logical partition regions from a physical disk that is managed by a controller in a controller group that is corresponding to each logical partition region, and recording a mapping relationship between the logical partition regions and the chunklets in a chunklet mapping table.

A method for reading or writing data is further provided in an embodiment of the present invention, which includes:
when receiving a request for reading or writing data on a disk array, querying a logical partition region mapping table for a logical partition region that is corresponding to a virtual address to which the request for reading or writing data is directed in a virtual volume;
querying a controller mapping table to determine a controller that is corresponding to the logical partition region;
querying a chunklet mapping table of the queried and determined controller for a chunklet that is corresponding to the virtual address to which the request for reading or writing data is directed, where each logical partition region corresponds to one controller in one controller group, and each logical partition region corresponds to a chunklet in a physical disk that is managed by a controller in a corresponding controller group; and
performing a data reading or writing operation on the queried and determined chunklet.

An apparatus for implementing a disk array is further provided in an embodiment of the present invention, which includes:
a logical partition region dividing module, configured to create logical partition regions according to the number of controllers in a controller group, where each logical partition region corresponds to one controller in one controller group, and further configured to trigger a second mapping relationship recording module and a disk selecting module;
the second mapping relationship recording module, configured to record a mapping relationship between the logical partition regions and the controllers in a controller mapping table; and
the disk selecting module, configured to allocate, according to a set disk selection policy, chunklets for the logical partition regions from a physical disk that is managed by a controller in a controller group that is corresponding to each logical partition region, and record a mapping relationship between the logical partition regions and the chunklets in a chunklet mapping table.

An apparatus for reading or writing data on a disk array is further provided in an embodiment of the present invention, which includes:
a logical partition region querying module, configured to: when receiving a request for reading or writing data on a disk array, query for a logical partition region mapping table a logical partition region that is corresponding to a virtual address to which the request for reading or writing data is directed in a virtual volume;
a controller querying module, configured to query a controller mapping table to determine a controller that is corresponding to the logical partition region;
a chunklet querying module, configured to query a chunklet mapping table of the queried and determined controller for a chunklet that is corresponding to the virtual address to which the request for reading or writing data is directed, where each logical partition region corresponds to one controller in one controller group, and each logical partition region corresponds to a chunklet in a physical disk that is managed by a controller in a corresponding controller group; and
a data reading or writing module, configured to perform a data reading or writing operation on the queried and determined chunklet.

A disk array system is further provided in an embodiment of the present invention, which includes the apparatus for implementing a disk array and the apparatus for reading or writing data on a disk array; and
a plurality of physical disks.

With the technical solution in each embodiment of the present invention, a chunklet in a physical disk that is managed by a controller in the same controller group is set to corresponding to each partition region, that is, each logical partition region is set to corresponding to a controller in only one controller group, so that logical partition regions of each controller may be operated in parallel. When a disk array is expanded, variable quantity of mapping relationships that need to be executed is little, and therefore, an expansion operation is completed easily.

### BRIEF DESCRIPTION OF THE DRAWINGS

To describe the technical solutions in the embodiments of the present invention more clearly, the accompanying drawings that need to be used for describing the embodiments are briefly introduced in the following. Apparently, the accompanying drawings are merely some embodiments of the present invention, and those skilled in the art may also obtain other drawings according to these accompanying drawings without creative efforts.
FIG. 1 is a flowchart of a method for implementing a disk array according to Embodiment 1 of the present invention;
FIG. 2 is a flowchart of another method for implementing a disk array according to Embodiment 1 of the present invention;
FIG. 3 is a schematic diagram showing an organizational architecture of a disk array according to Embodiment 1 of the present invention;
FIG. 4 is a flowchart of a method for implementing a disk array according to Embodiment 2 of the present invention;
FIG. 5 is a schematic diagram showing an organizational architecture of a disk array according to Embodiment 2 of the present invention;
FIG. 6 is a flowchart of a method for implementing a disk array according to Embodiment 4 of the present invention;
FIG. 7 is a flowchart of a method for implementing a disk array according to Embodiment 5 of the present invention;
FIG. 8 is a flowchart of a method for implementing a disk array according to Embodiment 6 of the present invention;
FIG. 9 is a schematic diagram showing an access path of a disk array according to the Embodiment 6 of the present invention;
FIG. 10 is a flowchart of a method for implementing a disk array according to Embodiment 7 of the present invention;
FIG. 11 is a schematic diagram showing an architecture of a disk array that is deployed with a value-added feature according to Embodiment 7 of the present invention;
FIG. 12 is a schematic structural diagram of an apparatus for implementing a disk array according to Embodiment 8 of the present invention;
FIG. 13 is a schematic structural diagram of an apparatus for implementing a disk array according to Embodiment 9 of the present invention; and
FIG. 14 is a schematic structural diagram of an apparatus for implementing a disk array according to Embodiment 10 of the present invention.

### DETAILED DESCRIPTION OF THE EMBODIMENTS

To make the objectives, technical solutions, and advantages of the embodiments of the present invention clearer, the technical solutions in the embodiments of the present invention are described clearly and completely in the following with reference to the accompanying drawings in the embodiments of the present invention. Apparently, the embodiments to be described are only a part rather than all of the embodiments of the present invention. Based on the embodiments of the present invention, all other embodiments obtained by those skilled in the art without creative efforts shall fall within the protection scope of the present invention.

### Embodiment 1

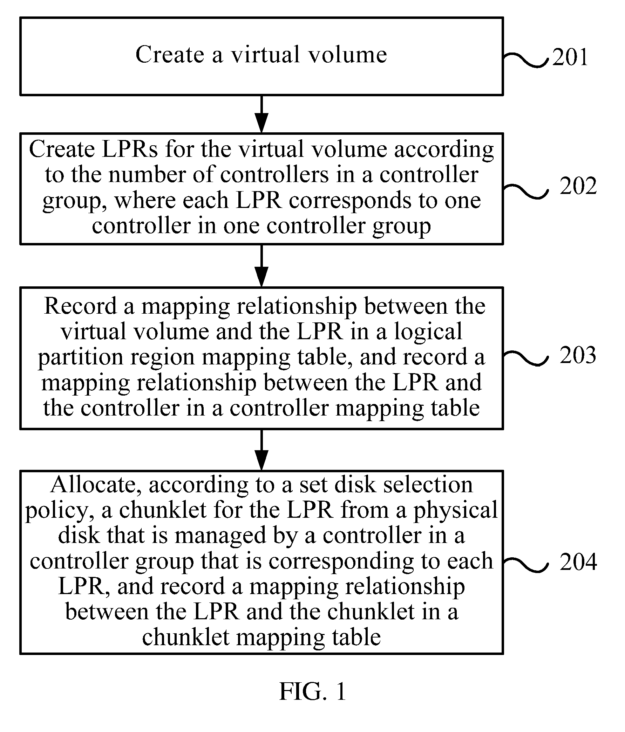

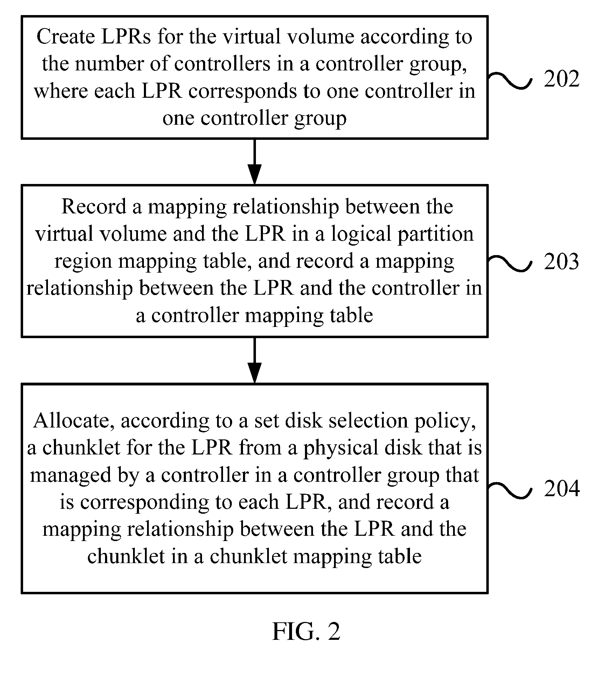

FIG. 1 is a flowchart of a method for implementing a disk array according to Embodiment 1 of the present invention. The method includes the following steps:
Step 201: Create a virtual volume; and for a disk array in which a virtual volume has been created, in this embodiment, step 202 may also be executed from the beginning directly, as shown in FIG. 2.
Step 202: Create logical partition regions (Logical Partition Region, referred to as LPR) for the virtual volume according to the number of controllers in a controller group, where each LPR corresponds to one controller in one controller group.
Step 203: Record a mapping relationship between the virtual volume and the LPR in a logical partition region mapping table, and record a mapping relationship between the LPR and the controller in a controller mapping table.
Step 204: Allocate, according to a set disk selection policy, a chunklet for the LPR from a physical disk that is managed by a controller in a controller group that is corresponding to each LPR, and record a mapping relationship between the LPR and the chunklet in a chunklet mapping table.

The controller group in this embodiment is one controller or a combination of a plurality of controllers. If the controller group includes only one controller, the controller group refers to the controller. In actual application, two controllers are generally required to form a master/slave backup relation. Therefore, each controller group including two controllers is taken as an example for description in the following. When controller expansion is performed, usually the number of controllers is increased based on a unit of two controllers.

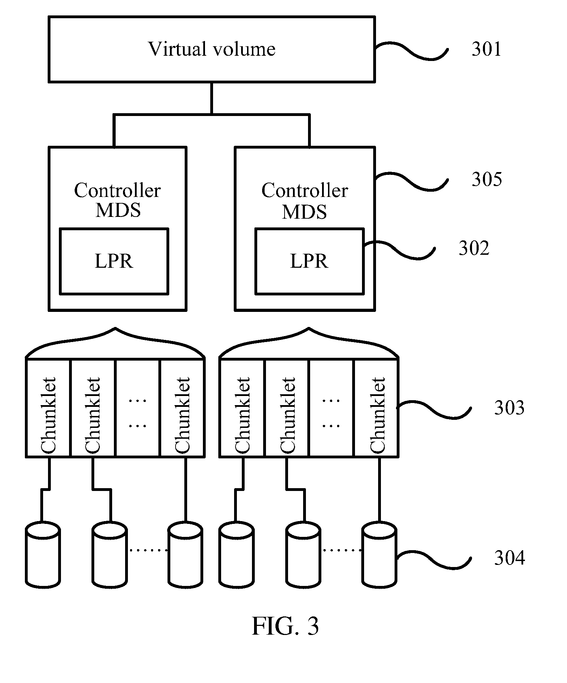

FIG. 3 is a schematic diagram showing an organizational architecture of a disk array according to Embodiment 1 of the present invention. As shown in FIG. 3, a storage space of this disk array includes three layers: a virtual volume 301, an LPR 302, and a chunklet 303. The number of virtual volumes 301 may be plural. In FIG. 3, one virtual volume 301 is taken as an example for description. The number of controllers 305 is two, and the two controllers form a controller group. The virtual volume 301 is divided into a plurality of LPRs 302 according to the number of controller groups. Since this controller group includes two controllers 305, to ensure that the two controllers 305 form a master/slave backup relation, preferably, the virtual volume 301 is divided into at least two LPRs, which correspond to each controller 305 respectively. A controller 305 without corresponding to a LPR 302 is equivalent to no storage space that is visible to a management user.

Each LPR 302 corresponds to only one controller 305 in one controller group. But each controller 305 may correspond to a plurality of LPRs 302. A chunklet 303 corresponding to each LPR 302 comes from a physical disk 304 that is managed by a controller 305 in one controller group. The chunklet 303 may be allocated from only a physical disk 304 that is managed by a controller 305 that is corresponding to the LPR 302. Since a controller group is usually a unit for addition simultaneously or deletion simultaneously, the chunklet 303 may also be allocated from physical disks 304 that are managed by all controllers 305 in the controller group that is corresponding to the LPR 302. Allocating the chunklet 303 from a plurality of physical disks 304 for the LPR 302 is determined according to a set disk selection policy. For example, to achieve a purpose of even distribution, the same number of chunklets 303 may be selected from each physical disk 304 that is managed by the controller group, and allocated to an LPR 302.

Three kinds of mapping relationships among the virtual volume 301, LPR 302, controller 305, and chunklet 303 are respectively recorded in a mapping table. Specifically, a mapping relationship between the LPR 302 and the controller 305 is recorded in a controller mapping table, which may generally be maintained by a media data server (Media Data Server, referred to as MDS). The MDS may be deployed on a controller 305 in any controller group. A mapping relationship between the virtual volume 301 and the LPR 302 is recorded in a logical partition region mapping table, which may be stored and maintained by the virtual volume 301. A mapping relationship between the LPR 302 and the chunklet 303 is recorded in a chunklet mapping table. A chunklet mapping table of each LPR 302 may generally be stored in a controller 305 that is corresponding to the LPR 302.

The preceding architecture may be applied to each virtual volume 301 among a plurality of virtual volumes 301. Each virtual volume 301 corresponds to its own LPR 302. Each controller 305 may correspond to a LPR 302 of each of a plurality of virtual volumes 301.

With the architecture of the disk array implemented by using the technical solution in this embodiment, a chunklet in a physical disk that is managed by a controller in the same controller group is set to corresponding to each LPR, so that LPRs of each controller may be operated in parallel, and variable quantity of mapping relationships is little, therefore an expansion operation is completed easily.

### Embodiment 2

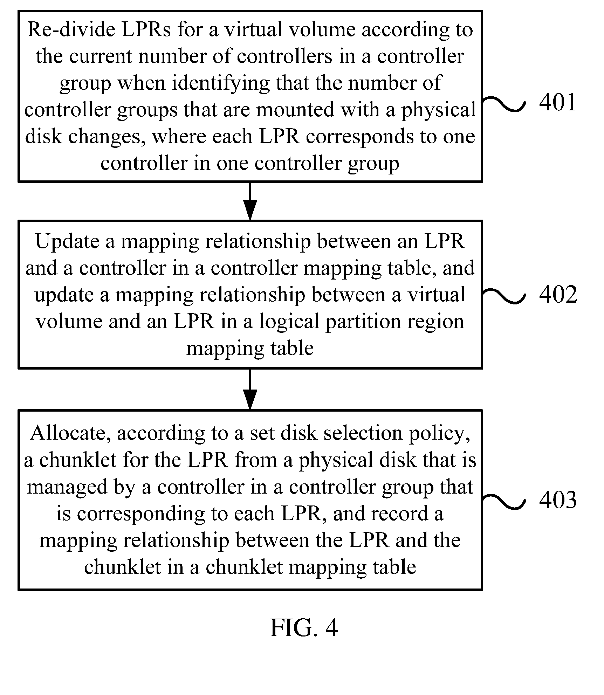

FIG. 4 is a flowchart of a method for implementing a disk array according to Embodiment 2 of the present invention. On the basis of Embodiment 1, this embodiment further includes the following steps:
Step 401: Re-divide LPRs for a virtual volume according to the current number of controllers in a controller group when identifying that the number of controller groups that are mounted with a physical disk changes, where each LPR corresponds to one controller in one controller group.
Step 402: Update a mapping relationship between an LPR and a controller in a controller mapping table, and update a mapping relationship between a virtual volume and an LPR in a logical partition region mapping table.
Step 403: Allocate, according to a set disk selection policy, a chunklet for the LPR from a physical disk that is managed by a controller in a controller group that is corresponding to each LPR, and record a mapping relationship between the LPR and the chunklet in a chunklet mapping table.

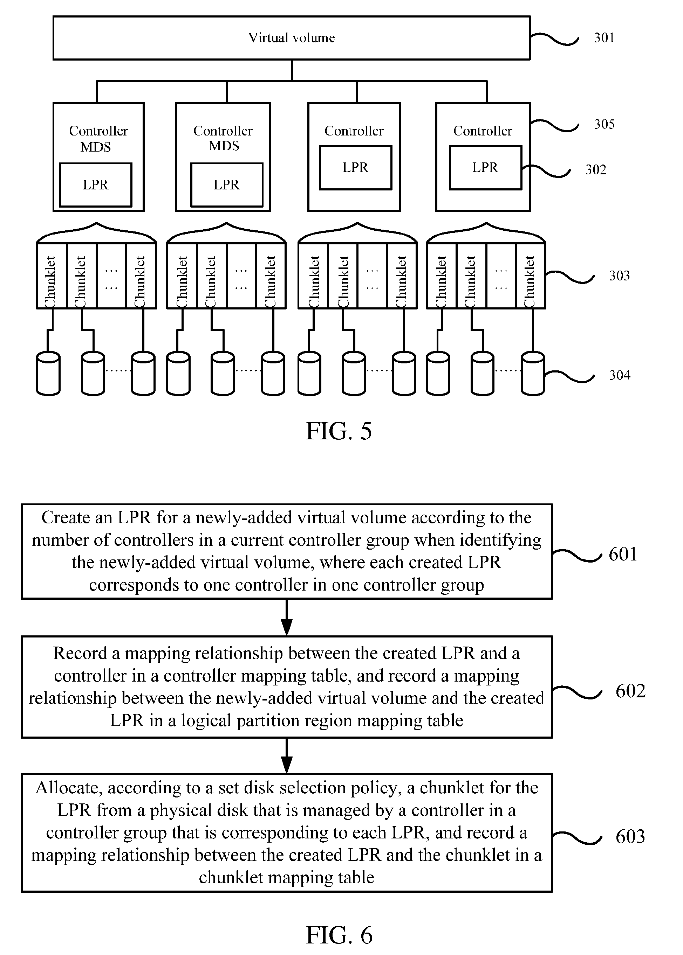

In this embodiment, controller expansion may be performed on the basis of the preceding disk array architecture, including cases of increasing and reducing a controller. Preferably, a physical disk and a controller are increased simultaneously or reduced simultaneously, which means that a corresponding relationship between a controller and a mounted physical disk does not change. If the number of physical disks does not change, a mounting relationship between a physical disk and a controller needs to be re-adjusted. A case as shown in FIG. 3 is taken as an example. When identifying a controller group that is formed by two newly-added controllers 305, as shown in FIG. 5, if the number of virtual volumes 301 does not change, in this case, re-divide LPRs 302 for the virtual volume 301 according to the number of current controller groups after controllers 305 are newly added. Each LPR 302 corresponds to one controller 305 in one controller group. If the number of current controller groups is two, and the number of specific controllers 305 is four, each virtual volume 301 is divided into at least four LPRs 302, so that each LPR 302 corresponds to each controller 305 in one controller group. The number of LPRs 302 may be larger than the number of controllers 305. That is, each controller 305 may correspond to a plurality of LPRs 302. But each LPR 302 can correspond to only one controller 305. If the number of LPRs 302 is smaller than that of controllers 305, it is equivalent to that LPRs 302 in this virtual volume 301 do not correspond to certain controllers 305. That is, a physical disk 304 that is managed by these controllers 305 cannot be used. Actually, it is equivalent to that the number of controllers 305 does not change, but only a controller 305 is replaced.

After the LPRs 302 are divided, update a mapping relationship between the LPR 302 and the controller 305 in the controller mapping table. After the LPRs 302 are divided, a mapping relationship between the virtual volume 301 and the LPR 302 in the logical partition region mapping table also needs to be updated. The logical partition region mapping table is used to store a mapping relationship between a virtual address in the virtual volume 301 and the LPR 302. The logical partition region mapping table may be stored and maintained by the virtual volume 301.

In this embodiment, it further needs to allocate, according to the set disk selection policy, a chunklet 303 to the LPR 302 from a physical disk 304 that is managed by a controller group that is corresponding to each LPR 302, and record a mapping relationship between the LPR 302 and the chunklet 303 in a chunklet mapping table. A chunklet mapping table of each LPR 302 may generally be stored in a controller 305 that is corresponding to the LPR 302.

When it is identified that the number of controller groups that are mounted with a physical disk 304 decreases, that is, when it is identified that a controller 305 and a physical disk 304 that is mounted on the controller 305 are deleted, for example, four controllers 305 in two controller groups as shown in FIG. 5 are decreased to two controllers 305 in one controller group as shown in FIG. 3, it still needs to re-divide LPRs 302 for the virtual volume 301 according to the number of current controller groups, where the re-divided LPRs 302 correspond to controllers 305 in the controller group, and allocate, according to the set disk selection policy, a chunklet 303 for a corresponding LPR 302 from a physical disk 304 that is managed by a controller 305 in the controller group. In addition, the mapping relationship in the controller mapping table, the mapping relationship in the logical partition region mapping table, and the mapping relationship in the chunklet mapping table are adjusted accordingly.

Each LPR corresponds to only a physical disk that is managed by a controller in the same controller group. An LPR of each controller is independent from each other. When a certain controller fails, only data access operation on the LPR of this controller is affected, but operability of an entire storage space is not affected.

### Embodiment 3

A method for implementing a disk array provided in Embodiment 3 may be based on Embodiment 1, and further includes a case that the number of physical disks changes.

When identifying that the number of physical disks that are managed by a controller group changes, according to a set disk selection policy, in physical disks that are currently managed by controllers in the controller group, that is, in physical disks whose number is changed, allocate a chunklet for an LPR that is corresponding to a controller in the controller group, and update a mapping relationship between the LPR and the chunklet in a chunklet mapping table.

The technical solution in this embodiment may be implemented based on a disk array architecture shown in FIG. 3 and FIG. 5. Change of the number of physical disks is generally relative to a controller group. The number of physical disks that are mounted on a certain controller may be increased or reduced. When adding a physical disk, an LPR corresponding to each controller in the controller group may re-execute a set disk selection policy in an original physical disk and newly-added physical disk to meet a general principle of even data distribution.

With the technical solution based on this embodiment, only a mapping relationship between an LPR and a chunklet under one controller group needs to be adjusted when a physical disk is expanded. However, in an existing disk array architecture, chunklets corresponding to each LD are distributed on physical disks that are managed by a plurality of controllers. Since a physical disk that is managed by each controller may correspond to all LPRs, a mapping relationship between all LPRs and chunklets may be affected when the physical disk is expanded. Compared with an existing technology, with the technical solution in this embodiment, expansion is easier.

Based on the preceding embodiment, a controller and a physical disk that is managed by the controller may be added simultaneously or deleted simultaneously, and a mounting relationship between the physical disk and the controller does not need to be changed. A mapping relationship under an unchanged controller does not change. Only a mapping relationship between a virtual volume and an LPR may be changed. An organizational architecture of a disk array implemented by using the preceding technical solution has flexibility, and may improve expansibility of the disk array. Each LPR corresponds to only a physical disk that is managed by one controller group, and has an independent mapping relationship. Therefore, for existing medium-end and low-end disk arrays, by using the technical solution in this embodiment, a dual-controller may be smoothly and conveniently expanded to a multi-controller disk array architecture. A parallel multi-controller disk array provided in this technical solution is not only applicable to expansion from a medium-end or low-end disk array to a high-end disk array, but also applicable to change of the number of controllers in an existing high-end disk array at the same time.

### Embodiment 4

FIG. 6 is a flowchart of a method for implementing a disk array according to Embodiment 4 of the present invention. This embodiment may be based on each of the preceding embodiments, and further includes a case that a virtual volume is added, which specifically includes the following steps:
Step 601: Create an LPR for a newly-added virtual volume according to the number of controllers in a current controller group when identifying the newly-added virtual volume, where each created LPR corresponds to one controller in one controller group.
Step 602: Record a mapping relationship between the created LPR and a controller in a controller mapping table, and record a mapping relationship between the newly-added virtual volume and the created LPR in a logical partition region mapping table.
Step 603: Allocate, according to a set disk selection policy, a chunklet for the LPR from a physical disk that is managed by a controller in a controller group that is corresponding to each LPR, and record a mapping relationship between the created LPR and the chunklet in a chunklet mapping table.

By using the technical solution in this embodiment, a virtual volume may be expanded conveniently. Each LPR that is created for a newly-added virtual volume correspond to only controllers in a part of controller groups, so that only a mapping relationship involved by controllers in the part of controller groups may be adjusted, and no adjustment needs to be performed under all physical disks and all controllers. A disk array architecture implemented by the technical solution in this embodiment makes adjustment to a mapping relationship under only a part of controllers possible.

### Embodiment 5

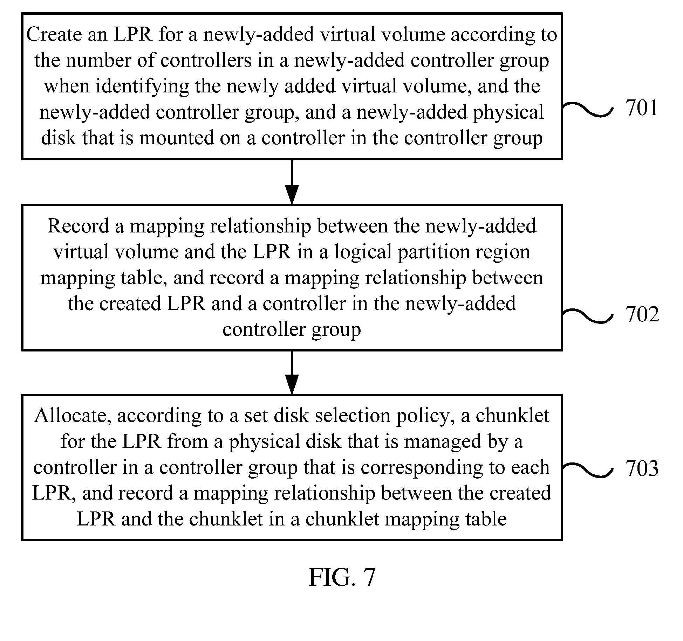

FIG. 7 is a flowchart of a method for implementing a disk array according to Embodiment 5 of the present invention. This embodiment may be based on each of the preceding embodiments, and includes a case that the numbers of virtual volumes, controllers, and physical disks are expanded at the same time, which is also a common situation that usually occurs in actual application. When a storage space needs to be expanded, a controller is added, a new physical disk is mounted, and a new virtual volume is created at the same time. The method in this embodiment includes the following steps:
Step 701: Create an LPR for a newly-added virtual volume according to the number of controllers in a newly-added controller group when identifying the newly added virtual volume, and the newly-added controller group, and a newly-added physical disk that is mounted on a controller in the controller group.
Step 702: Record a mapping relationship between the newly-added virtual volume and the LPR in a logical partition region mapping table, and record a mapping relationship between the created LPR and a controller in the newly-added controller group, where each logical partition region corresponds to one controller in one newly-added controller group.
Step 703: Allocate, according to a set disk selection policy, a chunklet for the LPR from a physical disk that is managed by a controller in a controller group that is corresponding to each LPR, and record a mapping relationship between the created LPR and the chunklet in a chunklet mapping table.

Based on the technical solution provided in this embodiment, only mapping relationships among the newly-added controller, physical disk, and virtual volume may be adjusted, and an original mapping relationship of the disk array does not need to be adjusted, thus implementing smooth transition from a dual-controller to a multi-controller.

### Embodiment 6

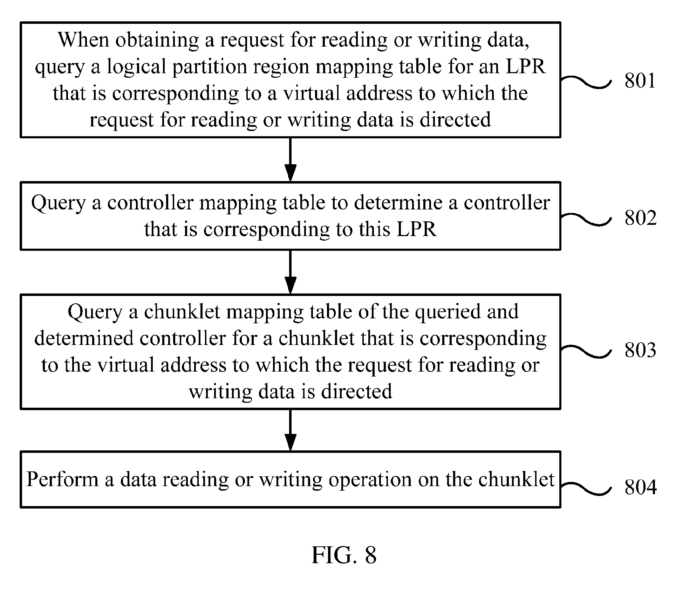

FIG. 8 is a flowchart of a method for implementing a disk array according to Embodiment 6 of the present invention. This method may be based on any one of the preceding embodiments for specifically introducing a procedure that a user performs reading or writing access on the disk array that is implemented based on the preceding embodiments, and includes the following steps:
Step 801: When obtaining a request for reading or writing data, query a logical partition region mapping table for an LPR that is corresponding to a virtual address to which the request for reading or writing data is directed.
Step 802: Query a controller mapping table to determine a controller that is corresponding to this LPR.
Step 803: Query a chunklet mapping table of the queried and determined controller for a chunklet that is corresponding to the virtual address to which the request for reading or writing data is directed.
Step 804: Perform a data reading or writing operation on the chunklet.

In this embodiment of the present invention, LPRs from different controllers form a virtual volume that is visible to a user. For the user, a visible disk space is a virtual address of the virtual volume without distinguishing between a controller and a physical disk.

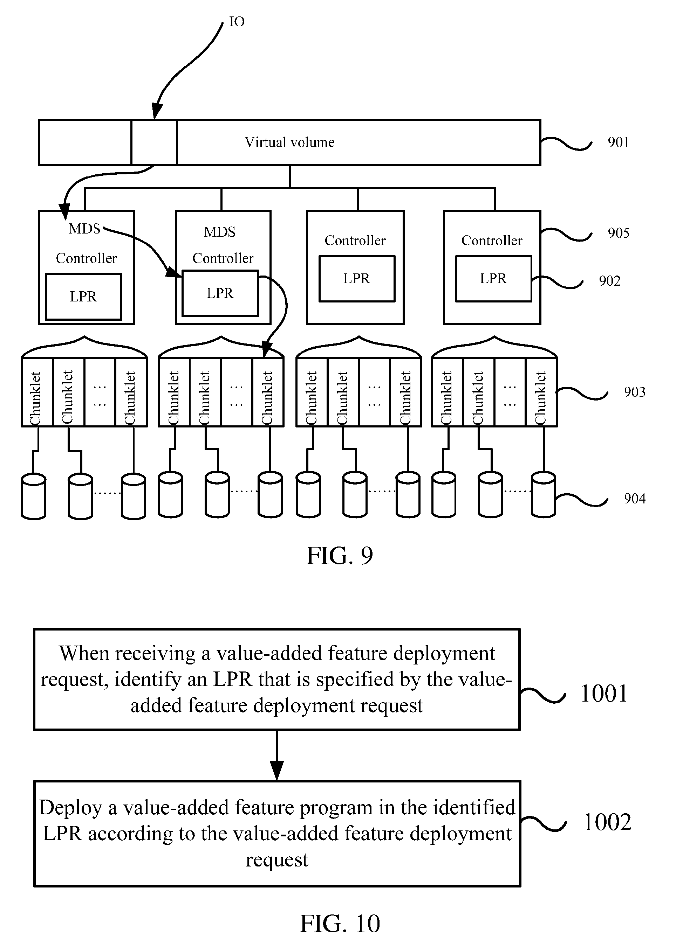

When the user needs to access a disk array, an access path is as shown in FIG. 9. First, a position of a virtual volume 901 that is corresponding to data that needs to be operated is determined based on input output (IO) data, that is, a virtual address is determined; the disk array queries, according to the virtual address, for the logical partition region mapping table to determine an LPR 902 to which a position accessed by the user belongs; then a controller mapping table on the MDS is queried to determine a controller 905 to which the LPR 902 belongs; and in this way, the request for reading or writing data is transferred to an LPR 902 of a selected controller 905. Since the LPR 902 is mapped, through a certain algorithm, by a chunklet 903 on a physical disk 904 to which the LPR 902 belongs, which chunklet 903 where read or written data is located may be known through this algorithm subsequently. Mapping algorithms between the LPR 902 and the chunklet 903 may be multiple, for example, an existing "CRUSH" algorithm may be adopted for implementation.

With the technical solution in this embodiment, after a controller and a physical disk are expanded, a data access manner for a user does not change, and change inside the disk array is invisible to the user. Therefore, an operation habit of the user may be continued, thus facilitating popularization and application.

### Embodiment 7

FIG. 10 is a flowchart of a method for implementing a disk array according to Embodiment 7 of the present invention. This embodiment may be based on any one of the preceding embodiments. An implemented disk array may reflect a fully virtualized system, and may support implementation of a plurality of value-added features at the same time, which specifically includes the following steps:
Step 1001: When receiving a value-added feature deployment request, identify an LPR that is specified by the value-added feature deployment request.
Step 1002: Deploy a value-added feature program in the identified LPR according to the value-added feature deployment request, where the value-added feature program may include a program, such as a thin provisioning (ThinProvisioning) program, or a snapshot (Snapshot) program, or a data deduplication (DDUP) program.

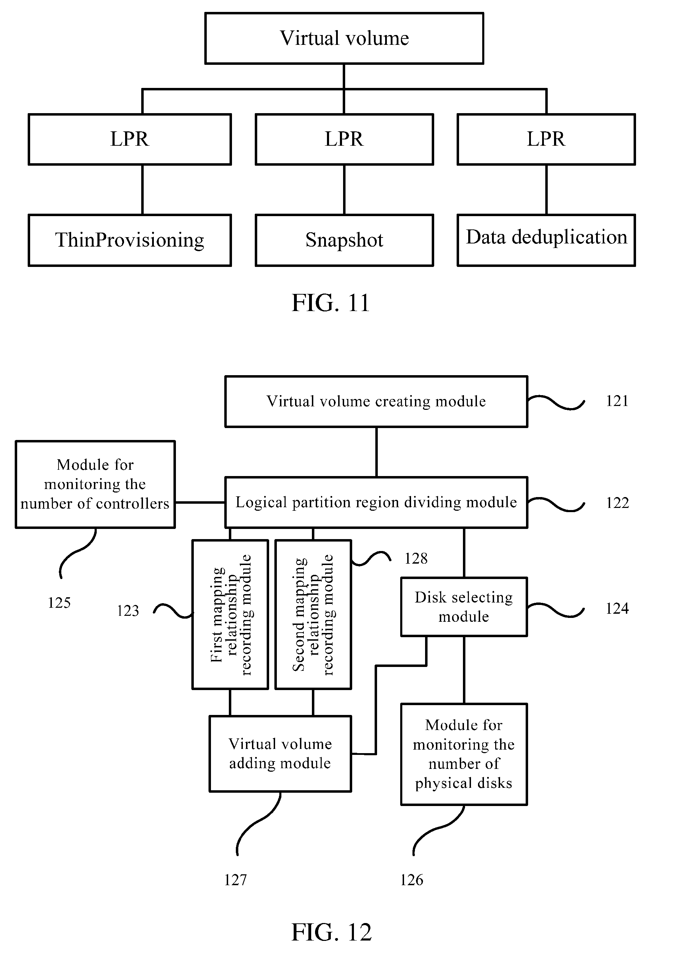

By using the technical solution in this embodiment, since each physical disk is independently controlled by its own LPR and controller, a value-added feature operation may be independently performed on LPRs, as shown in FIG. 11, and a thin provisioning program, a snapshot program, and a data deduplication program may be deployed on physical disks of three of the LPRs respectively to meet different user requirements.

With the technical solution in each embodiment of the present invention, a high-end disk array may be established by using a medium-end or low-end disk array, a high-end disk array may also be shrunken to a medium-end or low-end disk array, so that a storage structure has scalability. An advantage of making a controller and an LPR independent from each other is to support virtualized storage design, which not only may facilitate expansion, but also may deploy a virtualized service program or a value-added feature program respectively. Furthermore, when a disk is faulty, a faulty area of the disk may also be independently isolated, that is, faults of some physical disks affect only a particular controller but do not affect an entire disk array. This architecture supports implementation of virtualization. In other words, virtualized storage design may be implemented under this architecture.

### Embodiment 8

FIG. 12 is a schematic structural diagram of an apparatus for implementing a disk array according to Embodiment 8 of the present invention. The apparatus includes: a virtual volume creating module 121, a logical partition region dividing module 122, a first mapping relationship recording module 123, a second mapping relationship recording module 128, and a disk selecting module 124. The virtual volume creating module 121 is configured to create a virtual volume and trigger the logical partition region dividing module 122; the logical partition region dividing module 122 is configured to create logical partition regions for the virtual volume according to the number of controllers in a controller group, where each logical partition region corresponds to one controller in one controller group, and the logical partition region dividing module 122 is further configured to trigger the first mapping relationship recording module 123, the second mapping relationship recording module 128, and the disk selecting module 124; the first mapping relationship recording module 123 is configured to record a mapping relationship between a virtual volume and a logical partition region in a logical partition region mapping table; the second mapping relationship recording module 128 is configured to record a mapping relationship between a logical partition region and a controller in a controller mapping table; and the disk selecting module 124 is configured to allocate, according to a set disk selection policy, chunklets for the logical partition regions from a physical disk that is managed by a controller in a controller group that is corresponding to each logical partition region, and record a mapping relationship between the logical partition regions and the chunklets in a chunklet mapping table.

In actual application, the virtual volume creating module 121 is an optional module. For a disk array where a virtual volume has already been created, the logical partition region dividing module 122 may directly execute an operation of dividing logical partition regions for an existing virtual volume.

With a disk array architecture implemented by using the technical solution in this embodiment, a chunklet in a physical disk that is managed by a controller in the same controller group is set to corresponding to each LPR, so that LPRs of each controller may be operated in parallel, variable quantity of mapping relationships is little, and therefore, an expansion operation is completed easily.

On the basis of this embodiment, the apparatus may further include: a module for monitoring the number of controllers 125. The module for monitoring the number of controllers 125 is configured to trigger the logical partition region dividing module 122 when identifying that the number of controller groups that are mounted with a physical disk changes. The logical partition region dividing module 122 re-divides logical partition regions for the virtual volume according to the current number of controllers in a controller group, where each logical partition region corresponds to one controller in one controller group. The logical partition region dividing module 122 triggers the first mapping relationship recording module 123, the second mapping relationship recording module 128, and the disk selecting module 124 again. The first mapping relationship recording module 123 updates the mapping relationship between the logical partition region and the controller in the controller mapping table. The second mapping relationship recording module 128 updates the mapping relationship between the virtual volume and the logical partition region in the logical partition region mapping table. The disk selecting module 124 allocates, according to the set disk selection policy, a chunklet for the logical partition region from a physical disk that is managed by a controller in a controller group that is corresponding to each logical partition region, and records a mapping relationship between the logical partition region and the chunklet in the chunklet mapping table.

On the basis of this embodiment, the apparatus may further include: a module for monitoring the number of physical disks 126. The module for monitoring the number of physical disks 126 is configured to: when identifying the number of physical disks that are managed by a controller group changes, trigger the disk selecting module 124 for the controller group in which the number of physical disks changes. That is, the disk selecting module 124 allocates, according to the set disk selection policy, a chunklet for a logical partition region that is corresponding to a controller in the controller group from a physical disk that is currently managed by the controller in the controller group, and updates the mapping relationship between the logical partition region and the chunklet in the chunklet mapping table.

On the basis of this embodiment, the apparatus may further include: a virtual volume adding module 127. The virtual volume adding module 127 is configured to: when identifying a newly-added virtual volume, create logical partition regions for the newly-added virtual volume according to the number of controllers in a current controller group, where each created logical partition region corresponds to one controller in one controller group, and is further configured to trigger the first mapping relationship recording module 123, the second mapping relationship recording module 128, and the disk selecting module 124 for the newly-added virtual volume. The first mapping relationship recording module 123 records a mapping relationship between the created logical partition regions and the controllers in the controller mapping table, and the second mapping relationship recording module 128 records a mapping relationship between the newly-added virtual volume and the created logical partition regions in the logical partition region mapping table. The disk selecting module 124 allocates, according to the set disk selection policy, a chunklet for the logical partition region from a physical disk that is managed by a controller in a controller group that is corresponding to each created logical partition region, and records a mapping relationship between the created logical partition region and the chunklet in the chunklet mapping table.

### Embodiment 9

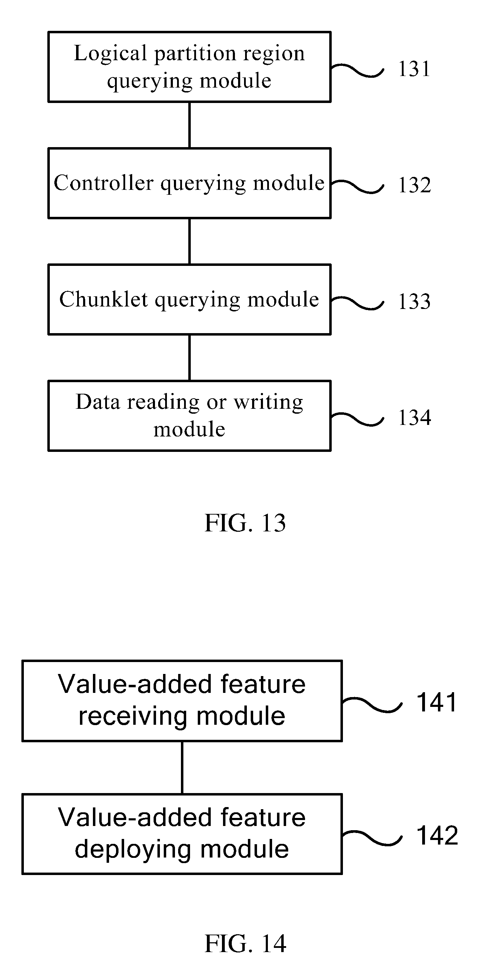

FIG. 13 is a schematic structural diagram of an apparatus for implementing a disk array according to Embodiment 9 of the present invention. When a data reading or writing function is implemented based on the disk array provided in this embodiment of the present invention, the apparatus may further include: a logical partition region querying module 131, a controller querying module 132, a chunklet querying module 133, and a data reading or writing module 134. The logical partition region querying module 131 is configured to: when obtaining a request for reading or writing data, query a logical partition region mapping table for a logical partition region that is corresponding to a virtual address to which the request for reading or writing data is directed in a virtual volume; the controller querying module 132 is configured to query a controller mapping table to determine a controller that is corresponding to the logical partition region; the chunklet querying module 133 is configured to query a chunklet mapping table of the queried and determined controller for a chunklet that is corresponding to the virtual address to which the request for reading or writing data is directed; and the data reading or writing module 134 is configured to perform a data reading or writing operation on the chunklet.

### Embodiment 10

FIG. 14 is a schematic structural diagram of an apparatus for implementing a disk array according to Embodiment 10 of the present invention. Based on the disk array provided in this embodiment of the present invention, value-added feature deployment may further be implemented. The apparatus may further include: a value-added feature receiving module 141 and a value-added feature deploying module 142. The value-added feature receiving module 141 is configured to: when receiving a value-added feature deployment request, identify a logical partition region specified by the value-added feature deployment request; and the value-added feature deploying module 142 is configured to deploy a value-added feature program in the identified logical partition region according to the value-added feature deployment request, where the value-added feature program includes a thin provisioning program, a snapshot program, and/or a data deduplication program.

The apparatus for implementing a disk array provided in the preceding embodiment of the present invention may execute the method for implementing a disk array provided in the embodiments of the present invention, so that the disk array has good expansibility and operability.

### Embodiment 11

A method for reading or writing data on a disk array is provided in Embodiment 11 of the present invention. A specific procedure is as shown in FIG. 8, and includes the following steps:
when receiving a request for reading or writing data on a disk array, querying a logical partition region mapping table for a logical partition region that is corresponding to a virtual address to which the request for reading or writing data is directed in a virtual volume;
querying a controller mapping table to determine a controller that is corresponding to the logical partition region;
querying a chunklet mapping table of the queried and determined controller for a chunklet that is corresponding to the virtual address to which the request for reading or writing data is directed, where each logical partition region corresponds to one controller in one controller group, and each logical partition region corresponds to a chunklet in a physical disk that is managed by a controller in a corresponding controller group; and
performing a data reading or writing operation on the queried and determined chunklet.

The technical solution in this embodiment may be executed by using the disk array implemented in the embodiments of the present invention. An execution process is similar to that of Embodiment 6. In this embodiment, LPRs from different controllers form a virtual volume that is visible to a user. For the user, a visible disk space is a virtual address of the virtual volume without distinguishing between a controller and a physical disk. By using the technical solution in this embodiment, after a controller and a physical disk are expanded, a data access manner for a user does not change and change inside the disk array is invisible to the user. Therefore, an operation habit of the user may be continued, thus facilitating popularization and application.

### Embodiment 12

An apparatus for reading or writing data on a disk array is provided in Embodiment 12 of the present invention. A structure of the apparatus that may be made reference to FIG. 13 is a functional structure independent of an apparatus for implementing a disk array. The apparatus for reading or writing data includes: a logical partition region querying module 131, a controller querying module 132, a chunklet querying module 133, and a data reading or writing module 134. The logical partition region querying module 131 is configured to: when receiving a request for reading or writing data on a disk array, query a logical partition region mapping table for a logical partition region that is corresponding to a virtual address to which the request for reading or writing data is directed in a virtual volume; the controller querying module 132 is configured to query a controller mapping table to determine a controller that is corresponding to the logical partition region; the chunklet querying module 133 is configured to query a chunklet mapping table of the queried and determined controller for a chunklet that is corresponding to the virtual address to which the request for reading or writing data is directed, where each logical partition region corresponds to one controller in one controller group, and each logical partition region corresponds to a chunklet in a physical disk that is managed by a controller in a corresponding controller group; and the data reading or writing module 134 is configured to perform a data reading or writing operation on the queried and determined chunklet.

With the technical solution in this embodiment, the preceding method for reading or writing data on a disk array may be executed. An execution process is similar to that of Embodiment 6. By using the technical solution in this embodiment, after a controller and a physical disk are expanded, a data access manner for a user does not change and change inside the disk array is invisible to the user. Therefore, an operation habit of the user may be continued, thus facilitating popularization and application.

It may be understood by those skilled in the art that all or a part of steps in the preceding method embodiments may be accomplished by a program instructing relevant hardware. The preceding program may be stored in a storage medium that can be read by a computer. When the program is executed, the steps in the preceding method embodiments are performed. The storage medium may include any medium capable of storing program codes, such as a ROM, a RAM, a magnetic disk, or an optical disk.

Finally, it should be noted that the preceding embodiments are only used to describe the technical solutions in the present invention, but are not intended to limit the present invention. It should be understood by those skilled in the art that although the present invention is described in detail with reference to the preceding embodiments, modifications may still be made to the technical solution described in each preceding embodiment, or equivalent replacements may be made to some technical features in the technical solution, however, these modifications or replacements do not make the essence of the corresponding technical solution depart from the spirit and scope of the technical solution in each embodiment of the present invention.

## Claims

1. A method for implementing a disk array, comprising:
creating logical partition regions according to the number of controllers in a controller group, wherein each logical partition region corresponds to one controller in one controller group;
recording a mapping relationship between the logical partition regions and the controllers in a controller mapping table; and
allocating, according to a set disk selection policy, chunklets for the logical partition regions from a physical disk that is managed by a controller in a controller group that is corresponding to each logical partition region, and recording a mapping relationship between the logical partition regions and the chunklets in a chunklet mapping table.

2. The method according to claim 1, further comprising:
when identifying that the number of controller groups which are mounted with the physical disk changes, re-dividing logical partition regions according to the current number of controllers in the controller group, wherein each logical partition region corresponds to one controller in one controller group;
updating a mapping relationship between a virtual volume and a logical partition region in a logical partition region mapping table; and
allocating, according to the set disk selection policy, chunklets for the logical partition regions from a physical disk that is managed by a controller in a controller group that is corresponding to each logical partition region, and recording a mapping relationship between the logical partition regions and the chunklets in the chunklet mapping table.

3. The method according to claim 1, further comprising:
when identifying that the number of physical disks that are managed by a controller group changes, allocating, according to the set disk selection policy, in physical disks that are currently managed by controllers in the controller group, chunklets for the logical partition regions that are corresponding to the controllers in the controller group, and update the mapping relationship between the logical partition regions and the chunklets in the chunklet mapping table.

4. The method according to any one of claims 1 to 3, further comprising:
when receiving a value-added feature deployment request, identifying a logical partition region specified by the value-added feature deployment request; and
deploying a value-added feature program in the identified logical partition region according to the value-added feature deployment request, wherein the value-added feature program comprises a thin provisioning program, or a snapshot program, or a data deduplication program.

5. An apparatus for implementing a disk array, comprising:
a logical partition region dividing module, configured to create logical partition regions according to the number of controllers in a controller group, wherein each logical partition region corresponds to one controller in one controller group, and further configured to trigger a second mapping relationship recording module and a disk selecting module;
the second mapping relationship recording module, configured to record a mapping relationship between the logical partition regions and the controllers in a controller mapping table; and
the disk selecting module, configured to allocate, according to a set disk selection policy, chunklets for the logical partition regions from a physical disk that is managed by a controller in a controller group that is corresponding to each logical partition region, and record a mapping relationship between the logical partition regions and the chunklets in a chunklet mapping table.

6. The apparatus according to claim 5, further comprising:
a module for monitoring the number of controllers, configured to trigger the logical partition region dividing module when identifying that the number of controller groups that are mounted with a physical disk changes.

7. The apparatus according to claim 6, further comprising:
a module for monitoring the number of physical disks, configured to: when identifying that the number of physical disks that are managed by a controller group changes, trigger the disk selecting module for the controller group in which the number of physical disks changes.

8. The apparatus according to any one of claims 6 to 7, further comprising:
a value-added feature receiving module, configured to: when receiving a value-added feature deployment request, identify a logical partition region specified by the value-added feature deployment request; and
a value-added feature deploying module, configured to deploy a value-added feature program in the identified logical partition region according to the value-added feature deployment request, wherein the value-added feature program comprises a thin provisioning program, a snapshot program, and/or a data deduplication program.

9. A method for reading or writing data on a disk array, comprising:
when receiving a request for reading or writing data on a disk array, querying a logical partition region mapping table for a logical partition region that is corresponding to a virtual address to which the data reading or writing request is directed in a virtual volume;
querying a controller mapping table to determine a controller that is corresponding to the logical partition region;
querying a chunklet mapping table of the queried and determined controller for a chunklet that is corresponding to the virtual address to which the request for reading or writing data is directed, wherein each logical partition region corresponds to one controller in one controller group, and each logical partition region corresponds to a chunklet in a physical disk that is managed by a controller in a corresponding controller group; and
performing a data reading or writing operation on the queried and determined chunklet.

10. An apparatus for reading or writing data on a disk array, comprising:
a logical partition region querying module, configured to: when receiving a request for reading or writing data on a disk array, query a logical partition region mapping table for a logical partition region that is corresponding to a virtual address to which the request for reading or writing data is directed in a virtual volume;
a controller querying module, configured to query a controller mapping table to determine a controller that is corresponding to the logical partition region;
a chunklet querying module, configured to query a chunklet mapping table of the queried and determined controller for a chunklet that is corresponding to the virtual address to which the request for reading or writing data is directed, wherein each logical partition region corresponds to one controller in one controller group, and each logical partition region corresponds to a chunklet in physical disk that is managed by a controller in a corresponding controller group; and
a data reading or writing module, configured to perform a data reading or writing operation on the queried and determined chunklet.

11. A disk array system, comprising:
a logical partition region dividing module, configured to create logical partition regions according to the number of controllers in a controller group, wherein each logical partition region corresponds to one controller in one controller group, and further configured to trigger a second mapping relationship recording module and a disk selecting module;
the second mapping relationship recording module, configured to record a mapping relationship between the logical partition regions and the controllers in a controller mapping table;
the disk selecting module, configured to allocate, according to a set disk selection policy, chunklets for the logical partition regions from a physical disk that is managed by a controller in a controller group that is corresponding to each logical partition region, and record a mapping relationship between the logical partition regions and the chunklets in a chunklet mapping table;
a logical partition region querying module, configured to: when receiving a request for reading or writing data on a disk array, query a logical partition region mapping table for a logical partition region that is corresponding to a virtual address to which the request for reading or writing data is directed in a virtual volume;
a controller querying module, configured to query a controller mapping table to determine a controller that is corresponding to the logical partition region;
a chunklet querying module, configured to query a chunklet mapping table of the queried and determined controller for a chunklet that is corresponding to the virtual address to which the request for reading or writing data is directed, wherein each logical partition region corresponds to one controller in one controller group, and each logical partition region corresponds to a chunklet in a physical disk that is managed by a controller in a corresponding controller group; and
a data reading or writing module, configured to perform a data reading or writing operation on the queried and determined chunklet;
and, the system further comprises a plurality of physical disks.
